# EUROPÄISCHE PATENTSCHRIFT

(11) **EP 3 529 468 B1**
(45) Veröffentlichungstag und Bekanntmachung des Hinweises auf die Patenterteilung: **24.03.2021**
(21) Anmeldenummer: 17784633.4
(22) Anmeldetag: 16.10.2017
(51) Int. Cl.: F01N 3/022, F01N 3/021, B01D 46/00, B01D 46/52

(54) **FILTER UND VERFAHREN ZUR HERSTELLUNG EINES FILTERS**
FILTER AND METHOD FOR PRODUCING A FILTER
FILTRE ET PROCÉDÉ DE PRODUCTION D'UN FILTRE

(30) Priorität: 21.10.2016 DE 102016220707
(43) Veröffentlichungstag der Anmeldung: 28.08.2019
(73) Patentinhaber: Vitesco Technologies GmbH, 30165 Hannover (DE)
(72) Erfinder: HIRTH, Peter, 51503 Rösrath (DE); BRÜCK, Rolf, 51429 Bergisch Gladbach (DE); HÄRIG, Thomas, 53819 Neunkirchen- Seelscheid (DE); KURTH, Ferdi, 53894 Mechernich (DE); SCHEPERS, Sven, 53844 Troisdorf (DE)
(86) Internationale Anmeldenummer: PCT/EP2017/076276
(87) Internationale Veröffentlichungsnummer: WO 2018/073142

(56) Entgegenhaltungen:
- DE-A1- 4 137 738
- DE-A1- 10 102 100
- DE-U1-202007 011 100

## Beschreibung

### Technisches Gebiet

Die Erfindung betrifft einen Filter zur Reinigung von Abgasen eines mit einem Ottokraftstoff betriebenen Verbrennungsmotors mit einem von Abgas in axialer Richtung durchströmbarem Gehäuse mit einer Einströmseite und mit einer Ausströmseite, wobei in dem Gehäuse aus einer Mehrzahl von Filterlagen ein Filterkörper gebildet ist, der von dem durch das Gehäuse strömbarem Abgas durchströmbar ist, die Filterlagen ringförmig ausgebildet sind und konzentrisch zueinander angeordnet sind, wobei alternierend zwei in radialer Richtung zueinander benachbarte Filterlagen an der Einströmseite miteinander fluiddicht verbunden sind und zwei in radialer Richtung zueinander benachbarte Filterlagen an der Ausströmseite miteinander verbunden sind. Außerdem betrifft die Erfindung ein Verfahren zur Herstellung eines Filters.

### Stand der Technik

Die Abgase von Verbrennungsmotoren enthalten neben den gasförmigen Bestandteilen auch Festkörper, die als Partikel mit dem Abgas strömen. Diese Partikel treten, sofern sie nicht einer geeigneten Nachbehandlung unterzogen werden, mit dem Abgas in die Umwelt aus und können dort zu Verschmutzungen und chemischen Belastungen führen. Insbesondere ausreichend kleine Partikel, die teilweise lungengängig sind, können zu gesundheitlichen Belastungen der Menschen führen.

Um das Austreten dieser Partikel in die Umwelt zu verhindern müssen geeignete Filter im Abgasstrang vorgesehen werden. Filter dieser Art sind in vielfältigen Varianten im Stand der Technik bekannt. Diese sind im Wesentlichen für den Einsatz in Abgassträngen von Dieselmotoren konzipiert und ausgelegt. Da zukünftig auch verstärkt die Abgasnachbehandlung in Benzinmotoren in den Fokus rücken wird, ist es notwendig Filter für den Abgasstrang von Benzinmotoren, insbesondere von direkt einspritzenden Benzinmotoren, bereitzustellen, die an die höheren Temperaturniveaus und die abweichenden Drücke des Abgases angepasst sind. Weiterhin müssen die Filter auf die speziell bei der Verbrennung von Benzin auftretenden Partikelgrößen abgestimmt sein.

Die DE 41 37 738 A1 offenbart einen Rußfilter für eine Brennkraftmaschine mit einem Filterkörper, der aus einer Vielzahl von einzelnen Einlass- und Auslasskanälen besteht. Um den durch einen in der Abgasleitung angeordneten Rußfilter verursachten Druckverlust zu reduzieren, wird vorgeschlagen, den Einlass- beziehungsweise den Auslassquerschnitt der einzelnen Kanäle proportional zu der Filterfläche, durch die der jeweilige Kanal begrenzt wird, zu wählen.

Die DE 20 2007 011100 U1 offenbart ein Filterelement für ein Kraftfahrzeug, mit einer einen Öffnungsquerschnitt aufweisenden Eintrittsöffnung, welche von einem Filtermaterial derart umschlossen ist, dass ein zu filterndes Rohfluid entlang einer Einströmrichtung im Wesentlichen senkrecht zu der Eintrittsöffnung in das Filterelement eintritt, wobei in dem Öffnungsquerschnitt mindestens ein zweiter Öffnungsquerschnitt vorgesehen ist.

Die DE 101 02 100 A1 offenbart ein Filterelement mit zick-zack-förmig ausgebildetem Filtermaterial.

### Darstellung der Erfindung, Aufgabe, Lösung, Vorteile

Daher ist es die Aufgabe der vorliegenden Erfindung einen Filter zu schaffen, welcher die Filterung von Partikeln im Abgas eines mit Benzin betriebenen Verbrennungsmotors erlaubt. Der Filter soll dabei insbesondere eine kompakte und robuste Bauform aufweisen und mit einfachen Mitteln für die Anwendung in Abgassträngen mit unterschiedlichen Leitungsquerschnitten angepasst werden können. Dabei soll der Filter eine hohe volumenspezifische Oberfläche aufweisen und einen möglichst geringen Gegendruck bei einer gleichzeitig hohen Abscheiderate erzeugen. Weiterhin ist es die Aufgabe ein Verfahren zur Herstellung eines Filters zu schaffen.

Die Aufgabe hinsichtlich des Filters wird durch einen Filter mit den Merkmalen von Anspruch 1 gelöst.

Ein Ausführungsbeispiel der Erfindung betrifft einen Filter zur Reinigung von Abgasen eines mit einem Ottokraftstoff betriebenen Verbrennungsmotors mit einem von Abgas in axialer Richtung durchströmbarem Gehäuse mit einer Einströmseite und mit einer Ausströmseite, wobei in dem Gehäuse aus einer Mehrzahl von Filterlagen ein Filterkörper gebildet ist, der von dem durch das Gehäuse strömbarem Abgas durchströmbar ist, wobei die Filterlagen ringförmig ausgebildet sind und konzentrisch zueinander angeordnet sind, wobei alternierend zwei in radialer Richtung zueinander benachbarte Filterlagen an der Einströmseite miteinander fluiddicht verbunden sind und zwei in radialer Richtung zueinander benachbarte Filterlagen an der Ausströmseite miteinander verbunden sind, wobei die ringförmigen Filterlagen eine in Umfangsrichtung des Filterkörpers verlaufende Wellung aufweisen.

Der Filterkörper ist insgesamt derart aufgebaut, dass Abgas von der Einströmseite in die zwischen den konzentrisch zueinander angeordneten Filterlagen ausgebildeten Strömungskanäle einströmen kann. Das Abgas strömt hierbei entlang einer axialen Richtung in die Strömungskanäle ein. Die Strömungskanäle sind bauartbedingt jedoch hin zur Ausströmseite verschlossen, wodurch das Abgas eine Umlenkung in radialer Richtung erfährt. Die Filterlagen sind derart ausgebildet, dass das Abgas diese durchströmen kann, Partikel einer gewissen definierten Mindestgröße aber von den Filterlagen zurückgehalten werden. Das Abgas kann somit durch die radiale Umlenkung in die jeweils benachbarten Strömungskanäle überströmen, die sich von der Einströmseite hin zur Ausströmseite erstrecken. Nach dem Übergang in den radial benachbart angeordneten Strömungskanal kann das Abgas in axialer Richtung hin zur Ausströmseite strömen und schließlich aus dem Filterkörper ausströmen.

Durch die fluiddichte Verbindung der jeweiligen Filterlagen an der Einströmseite und der Ausströmseite wird eine direkte Durchströmung in axialer Richtung vermieden.

Die in Umfangsrichtung des Filterkörpers verlaufende Wellung der ringförmigen Filterlagen ist vorteilhaft, um die Stabilität der einzelnen Filterlagen zu erhöhen, wodurch insgesamt der ganze Filterkörper stabiler wird. Zusätzlich wird durch die Wellung insbesondere die Oberfläche der Filterlage, die einen jeweiligen Strömungskanal räumlich begrenzt, im Vergleich zu einem nicht gewellten Ring vergrößert.

Die Wellung ist bevorzugt derart gestaltet, dass sie die Wellenberge und die Wellentäler in radialer Richtung aus der ansonsten ringförmigen Filterlage ausformen. Durch eine Wellung der Filterlagen kann insbesondere eine Vergrößerung der Filterfläche erreicht werden. Bevorzugt wird durch die Wellung die Filterfläche der ansonsten ringförmigen Filterlagen um den Faktor 1,2 bis 4 vergrößert. Besonders bevorzugt wird die Filterfläche dabei um den Faktor 1,5 bis 3 vergrößert.

Besonders vorteilhaft ist es, wenn der Filterkörper in radialer Richtung abwechselnd sich von der Einströmseite hin zur Ausströmseite verjüngende Strömungskanäle und sich von der Ausströmseite hin zur Einströmseite verjüngende Strömungskanäle aufweist. Dies ist vorteilhaft, um ein möglichst einfaches Einströmen und Ausströmen in den Filterkörper beziehungsweise aus dem Filterkörper zu ermöglichen. Aufgrund des an der Einströmseite und der Ausströmseite größeren Öffnungsquerschnitts der Strömungskanäle ist das Einströmen erleichtert. Durch die Verjüngung der Strömungskanäle von der Einströmseite hin zur Ausströmseite sinkt die durchströmbare Querschnittsfläche wodurch der Übergang des Abgases durch die Filterlage in die jeweils benachbarten Strömungskanäle begünstigt wird. Die sich dann hin zur Ausströmseite erweiternden Strömungskanäle führen zu einer vereinfachten Abströmung des Abgases nach dem Durchtritt durch die Filterlagen.

Auch ist es vorteilhaft, wenn der Filterkörper in einem Schnitt entlang der Mittelachse des Gehäuses eine wellenförmige Form aufweist, wobei die Wellung zwischen der Einströmseite und der Ausströmseite verläuft. Durch diese wellenförmige Form wird sichergestellt, dass die Querschnittsfläche der Strömungskanäle an der Einströmseite und der Ausströmseite möglichst groß sind, wodurch das Einströmen und das Ausströmen vereinfacht werden. Durch den in Strömungsrichtung erst geringer werdenden Querschnitt der Strömungskanäle wird der Übertritt des Abgases durch die den Strömungskanal räumlich begrenzende Filterlage forciert.

Wesentliche Einflussfaktoren für die Durchströmung des Filterkörpers sind, die Abgasmenge im Strömungskanal, die Strömungsgeschwindigkeit und der durch die Durchströmung der Filterlage verursachte Druckverlust. Durch die sich erst verjüngenden Strömungskanäle und die sich nach dem Durchtritt durch die Filterlage erweiternden Strömungskanäle wird eine besonders vorteilhaft Bauform realisiert, die die Durchströmung der Filterlagen begünstigt, wodurch insgesamt ein geringer Druckverlust durch den Filterkörper verursacht wird und die Reinigungsrate besonders hoch ist.

Ein bevorzugtes Ausführungsbeispiel ist dadurch gekennzeichnet, dass die Filterlagen durch ein Metallvlies gebildet sind. Ein Metallvlies ist beispielsweise durch das Sintern von flächig verteilten Metallfäden zu erzeugen. Ein Metallvlies hat den Vorteil, dass es besonders temperaturresistent ist, was insbesondere dem Einsatz in mit Benzin betriebenen Verbrennungsmotoren dienlich ist. Weiterhin lässt sich ein solches Metallvlies leicht auf die jeweils benötigte Porengröße einstellen. Darüber hinaus ist es besonders leicht mechanisch zu verformen, wodurch insbesondere die Herstellung vereinfacht wird.

Auch ist es zu bevorzugen, wenn die Filterlagen an den der Einströmseite zugewandten und/oder an den der Ausströmseite zugewandten Endbereichen einen fluidundurchlässigen in Umfangsrichtung verlaufenden Metallstreifen aufweisen.

Ein solcher Metallstreifen ist insbesondere vorteilhaft, um die Filterlagen miteinander verlöten oder verschweißen oder auf andere Weise verbinden zu können. Weiterhin trägt er zur Erhöhung der Stabilität der einzelnen Filterlagen bei.

Darüber hinaus ist es vorteilhaft, wenn die einzelnen Filterlagen durch ringförmig aufgerollte Metallfolien gebildet sind, wobei sich der Querschnitt der jeweiligen Filterlagen von der Einströmseite hin zur Ausströmseite konisch verjüngt oder konisch erweitert. Durch diese ringförmig aufgerollten Filterlagen, die sich jeweils von der Einströmseite zur Ausströmseite oder von der Ausströmseite zur Einströmseite verjüngen, können besonders vorteilhaft die Strömungskanäle mit ihren sich entlang der Strömungsrichtung verjüngenden und nach dem Übertritt durch die Filterlage erweiternden Querschnitten erzeugt werden.

Weiterhin ist es vorteilhaft, wenn jeweils zwei in radialer Richtung direkt zueinander benachbarte Filterlagen an der Einströmseite oder der Ausströmseite miteinander fluiddicht verbunden sind. Dies ist besonders vorteilhaft, um zu verhindern, dass Abgas ungefiltert an der Stoßstelle zwischen zwei Filterlagen hindurch strömen kann.

Auch ist es zweckmäßig, wenn die jeweils fluiddicht miteinander verbundenen Filterlagen endseitig in rinnenartige Ringe eingesetzt sind und die jeweiligen Endbereiche der Filterlagen von den rinnenartigen Ringen umfasst sind. Insbesondere wird die Stoßstelle zwischen den beiden Filterlagen von dem rinnenartigen Ring überdeckt. Der rinnenartige Ring kann beispielsweise auch einen v-förmigen Querschnitt aufweisen, so dass die Metallstreifen der Filterlagen, die in einem definierten Winkel zueinander angestellt sind, passgenau in dem Ring sitzen.

In dem rinnenartigen Ring kann vorteilhafterweise auch ein Lotmaterial eingefüllt sein, welches zur Verlötung der beiden jeweils eingesteckten Filterlagen genutzt werden kann. Darüber hinaus ist es vorteilhaft, wenn zwischen zwei miteinander fluiddicht verbundenen Filterlagen ein in Umfangsrichtung verlaufendes Dichtungselement angeordnet ist. Ein Dichtungselement ist vorteilhaft, um das ungewollte Durchströmen der Stoßstelle zu vermeiden. Das Dichtungselement kann beispielsweise durch ein zusätzliches Metallband gebildet sein. Auch kann das Dichtungselement vorteilhaft durch ein Metallband gebildet sein, welches teilweise aus einem Lotmaterial besteht, das sich bei den für einen Lötvorgang notwendigen Temperaturen verflüssigt und beim Abkühlen die beiden Filterlagen fluiddicht miteinander verbindet.

Weiterhin ist es zweckmäßig, wenn die in radialer Richtung äußerste erste Filterlage an der Einströmseite mit dem Gehäuse fluiddicht in Umfangsrichtung verbunden ist und diese erste Filterlage an der Ausströmseite mit der in radialer Richtung hin zum Zentrum direkt benachbarten zweiten Filterlage in Umfangsrichtung fluiddicht verbunden ist, und die zweite Filterlage an der Einströmseite mit der in radialer Richtung dritten Filterlage in Umfangsrichtung fluiddicht verbunden ist, wobei sich dieses Verbindungsprinzip bis zur in radialer Richtung betrachtet innersten Filterlage fortsetzt, die endseitig an der Einströmseite oder der Ausströmseite fluiddicht mit sich selbst verschlossen ist.

Dieses Prinzip der Verbindung der Filterlagen untereinander führt zu einem Filterkörper, der jeweils von der Einströmseite hin zur Ausströmseite sich verjüngende Strömungskanäle aufweist, während sich die Strömungskanäle, die erst nach dem Durchtritt durch eine Filterlage durchströmt werden können, von der Einströmseite hin zur Ausströmseite erweitern. Dies ergibt insgesamt einen besonders gut zu durchströmenden Filterkörper, der einerseits eine hohe Reinigungswirkung hat, da alles Abgas den Filter zwingend durchströmen muss, und andererseits einen niedrigen Druckverlust erzeugt.

Auch ist es zu bevorzugen, wenn zwischen zwei zueinander in radialer Richtung direkt benachbarten Filterlagen ein wellenförmiges in Umfangsrichtung verlaufendes Abstandselement angeordnet ist. Ein solches Abstandselement kann beispielsweise durch einen gewellten Ring gebildet sein, der sich von der Einströmseite oder der Ausströmseite aus einige Millimeter in den Filterkörper hinein erstreckt. Bevorzugt erstreckt sich das Abstandselement nicht weiter in den Filterkörper hinein, als es der an den Filterlagen ausgebildete fluidundurchlässige Metallstreifen tut. Auf diese Weise ist sichergestellt, dass keine Filterfläche durch das Abstandselement verdeckt wird.

Darüber hinaus ist es vorteilhaft, wenn die in radialer Richtung innerste Filterlage hin zur Einströmseite oder hin zur Ausströmseite endseitig fluiddicht verschlossen ist, wodurch diese Filterlage eine kegelförmige Grundform aufweist. Dies ist notwendig, um das ungefilterte Überströmen von Abgas im Zentrum des Filterkörpers zu verhindern.

Auch ist es zweckmäßig, wenn die in radialer Richtung zueinander benachbarten Filterlagen mit Ausnahme der in radialer Richtung äußersten Filterlage und der innersten Filterlage die gleiche Anzahl an Wellenbergen und Wellentälern in Umfangsrichtung aufweisen. Dies ist vorteilhaft, um die jeweils zueinander benachbarten Filterlagen besser miteinander verbinden zu können. Insbesondere zwischen den jeweils miteinander zu verbindenden Bereichen zweier Filterlagen sollten möglichst geringe Unterschiede hinsichtlich der Formgebung und der Abmaße bestehen, um eine möglichst spannungsfreie und maßhaltige Verbindung zu ermöglichen. Durch die Anwendung in einem Abgasstrang eines Verbrennungsmotors ist mit erhöhten mechanischen und thermischen Belastungen zu rechnen, die jeweils die Beschädigung einer Verbindungsstelle verursachen können, insbesondere dann, wenn die Verbindungsstelle unter mechanischer Spannung steht.

Um weiterhin Spannungen bei der Verbindung zweier Filterlagen zu reduzieren oder gänzlich zu vermeiden, sind vorteilhafterweise auch die Umfänge von direkt zueinander benachbarten Filterlagen zumindest im Bereich der Verbindungsstellen gleich groß.

Darüber hinaus ist es vorteilhaft, wenn die Amplitude der Wellenberge und der Wellentäler an den Filterlagen in radialer Richtung des Filterkörpers von außen nach innen zunimmt. Dies ergibt sich aus der Tatsache, dass die Filterlagen vorzugsweise alle die gleiche Anzahl an Wellenbergen und Wellentälern aufweist. Durch den naturgemäß in radialer Richtung nach innen kleiner werdenden Durchmesser, müssen die Amplituden der Wellenberge und Wellentäler steigen.

Die Aufgabe hinsichtlich des Verfahrens wird durch ein Verfahren mit den Merkmalen von Anspruch 15 gelöst.

Ein Ausführungsbeispiel der Erfindung betrifft ein Verfahren zur Herstellung eines Filters, wobei der Filterkörper aus einer Mehrzahl von Filterlagen gebildet ist, die konzentrisch zueinander angeordnet sind und in ein Gehäuse eingesetzt sind, wobei die einzelnen Filterlagen durch das ringförmige Aufwickeln einer Metallfolie ausgebildet werden und die ringförmigen Metallfolien anschließend über ein sich konisch erweiterndes Formelement gezogen werden, wobei die den Filterkörper bildenden Filterlagen von innen nach außen jeweils um eine definierte Strecke weiter über das sich konisch erweiternde Formelement gezogen werden, um konische Filterlagen mit größer werdendem Durchmesser zu erhalten.

Vorzugsweise wird ein Filterkörper nur aus Filterlagen einer Größe erzeugt. Die Filterlage im Filterkörper mit dem kleinsten Querschnitt bestimmt somit im Wesentlichen die Größe der Filterlagen im Ausgangszustand. Durch das Ziehen der ringförmigen Filterlagen über ein sich konisch erweiterndes Formelement können die ringförmigen Filterlagen aufgeweitet werden. Abhängig davon wie weit ein ringförmiges Filterelement über das Formelement gezogen wird, wird es ausgeweitet und erhält ebenfalls eine konische Gestalt. Wird eine gewellte ringförmige Filterlage über den konischen Formkörper oder Konus gezogen, wird beim Aufweiten in Abhängigkeit davon, wie weit der gewellte Ring über den Konus gezogen wird, die Wellhöhe der einzelnen Filterlage mehr oder weniger reduziert. Wird die ringförmige Filterlage bis an das Ende des Konus gezogen, so wird die Wellhöhe maximal reduziert.

Auf diese Weise sind Filterlagen bis zu einem gewissen Maximaldurchmesser zu erzeugen. Der erzeugbare Maximaldurchmesser ist dabei insbesondere abhängig von den Materialeigenschaften der Filterlage. Es ist durch dieses Verfahren besonders einfach aus einheitlichen Ausgangsprodukten die einzelnen Filterlagen mit unterschiedlichen Durchmessern und einer konischen Formgebung zu erhalten.

Da die ringförmigen Filterlagen eine in Umfangsrichtung gewellte Form aufweisen, verringert sich durch das Aufweiten der ringförmigen Filterlagen an dem Formelement die Amplitude der Wellung umso stärker, je weiter die Filterlage über das Formelement gezogen wird. Durch das Ziehen der ringförmigen Filterlagen über das konische Formelement, wird die Filterlage aufgeweitet. Aufgrund der konischen Form des Formelementes geschieht dies an einem der axialen Endbereiche mehr als an dem jeweils anderen axialen Endbereich.

Darüber hinaus ist es vorteilhaft, wenn die konisch zulaufenden Filterlagen derart ineinander gesetzt werden, dass die zueinander in radialer Richtung direkt benachbarten Filterlagen abwechselnd mit der kleinere Querschnittsfläche zur Einströmseite und zur Ausströmseite angeordnet sind, so dass sich ein ziehharmonikaartiger Aufbau des Filterkörpers ergibt, wobei der mittlere Querschnitt der Filterlagen in radialer Richtung von außen nach innen abnimmt. Durch eine solche Anordnung der einzelnen Filterlage zueinander ist ein Filterkörper mit der erfindungsgemäßen Struktur besonders leicht herstellbar.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine schematische Ansicht der Einströmseite des Filterkörpers,
- Fig. 2: eine Schnittansicht durch die Stoßstelle zweier Filterlagen,
- Fig. 3: eine perspektivische Ansicht einer ringförmigen Filterlage, die aus einem gewellten Metallvlies mit endseitigen Metallbändern gebildet ist,
- Fig. 4: eine Ansicht einer ringförmigen Filterlage, wie in Figur 3, wobei die Filterlage über ein sich konisch erweiterndes Formelement gezogen ist,
- Fig. 5: im linken Teil eine Prinzipskizze, welche zwei Filterlagen zeigt, die in einen rinnenförmigen Ring eingesteckt sind und im rechten Teil einen rinnenförmigen Ring, der eine Wellung in Umfangsrichtung aufweist, die der Wellung der ringförmigen Filterlagen angepasst ist,
- Fig. 6: eine Ansicht einer sogenannten Filtertüte, die aus einer Filterlage gebildet ist und die in radialer Richtung innerste Filterlage des Filterkörpers bildet, und
- Fig. 7: zeigt einen Schnitt entlang der Mittelachse durch das Gehäuse des Filters, wobei die einzelnen konzentrisch zueinander angeordneten Filterlagen ebenfalls im Schnitt dargestellt sind.

### Bevorzugte Ausführung der Erfindung

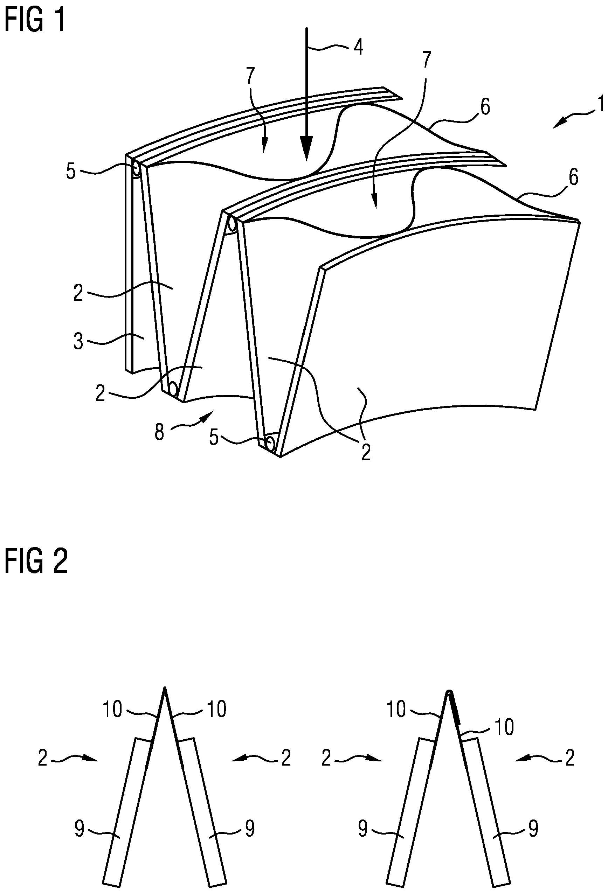

Die Figur 1 zeigt einen Teilausschnitt eines Filterkörpers 1. Der Filterkörper 1 ist aus einer Mehrzahl von Filterlagen 2 gebildet, die konzentrisch zueinander angeordnet sind. Die Filterlagen 2 weisen einen konischen Verlauf auf.

Mit dem Pfeil 4 ist die Richtung des durch den Filterkörper 1 strömenden Abgases dargestellt. Die in radialer Richtung äußerste Filterlage 2 ist direkt mit der Gehäusewand 3 in Umfangsrichtung verbunden. Zwischen den Filterlagen 2, insbesondere an den Stoßstellen zwischen zwei zueinander benachbarten Filterlagen 2 ist ein in Umfangsrichtung umlaufendes Dichtelement 5 angeordnet. Ein solches Dichtelement ist auch an der Stoßstelle zwischen der äußersten Filterlage 2 und der Gehäusewand 3 angeordnet.
An der Einströmseite ist zusätzlich ein gewelltes Abstandselement 6 zwischen den Filterlagen angeordnet. Dieses Abstandselement 6 dient zur Beabstandung der zueinander benachbarten Filterlagen 2 zueinander und der Erhöhung der Stabilität des Filterkörpers 1.

Durch die konische Ausgestaltung der Filterlagen 2 und der jeweils abwechselnden Anordnung der Filterlagen 2 derart, dass der Endbereich der Filterlage 2 mit dem kleineren Durchmesser abwechselnd hin zur Einströmseite und hin zur Ausströmseite angeordnet ist, entsteht der wellenförmige Aufbau des Filterkörpers 1. Insbesondere werden dadurch die Strömungskanäle 7 ausgebildet, welche sich von der Einströmseite hin zur Ausströmseite verjüngen, und die Strömungskanäle 8, welche sich von der Einströmseite hin zur Ausströmseite erweitern.

Die Figur 2 zeigt im linken Teil einen Schnitt durch eine Stoßstelle zwischen zwei Filterlagen 2, wobei die gezeigten Filterlagen einen aus einem Metallvlies bestehenden Bereich 9 aufweisen und einen aus einem fluidundurchlässigen Metallstreifen gebildeten Bereich 10. In Figur 2 ist insbesondere die Stoßstelle zwischen zwei direkt zueinander benachbart angeordneten Filterlagen 2 gezeigt.

Im linken Teil der Figur 2 stoßen die beiden Filterlagen 2 direkt spitz aneinander. Sie können durch das Aufbringen eines Lotes miteinander verlötet werden. Alternativ könne beispielsweise auch das Rollschweißverfahren angewendet werden, um eine dauerhaft fluiddichte Verbindung zwischen den beiden Filterlagen 2 zu erzeugen.

Im rechten Teil der Figur 2 ist die linke Filterlage 2 an der Stoßstelle über die rechte Filterlage 2 geklappt. Dabei ist insbesondere der durch den Metallstreifen gebildete Bereich 10 über den Endbereich der rechten Filterlage 2 gebogen. Durch diesen Aufbau kann auf einfach Weise eine fluiddichte Verbindung der Filterlagen erreicht werden, da im Bereich der Stoßstelle eine Doppellagigkeit erzeugt wird.

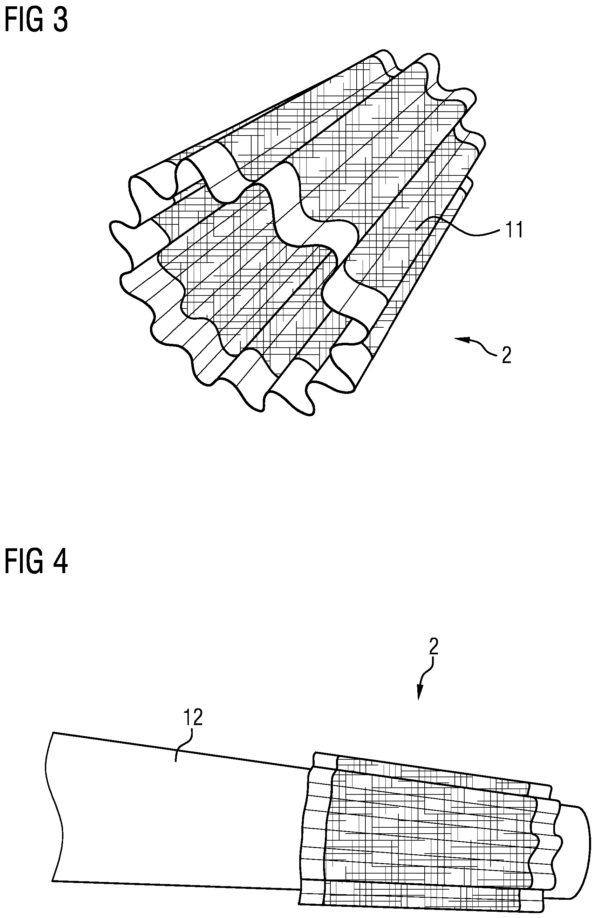

Die Figur 3 zeigt eine perspektivische Ansicht einer ringförmigen Filterlage 2, die aus einem gewellten Metallvlies 11 gebildet ist. Die Filterlage 2 weist an den axialen Endbereichen jeweils einen in Umfangsrichtung verlaufenden Metallstreifen 10 auf, wie er bereits in Figur 2 gezeigt wurde. Zwischen den Metallstreifen 10 ist ein Metallvlies 9 angeordnet, welches das eigentliche Filtermaterial bildet.

Die ringförmige Filterlage 2 ist konisch geformt, so dass der Querschnitt des einen axialen Endbereichs kleiner ist als der Querschnitt des anderen axialen Endbereichs.

Figur 4 zeigt die ringförmige Filterlage 2 der Figur 3 während diese auf ein Formelement 12 aufgesteckt ist. Das Formelement 12 weist einen sich von der Spitze konisch erweiternden Querschnitt auf. Durch das Aufschieben der Filterlage 2 auf das Formelement 12 kann somit die Filterlage 2 eine konische Formgebung erhalten. Je weiter die Filterlage 2 von der Spitze über das Formelement 12 geschoben wird, umso stärker wird die Filterlage aufgeweitet. Durch das unterschiedlich weite Aufschieben auf das Formelement 12 können somit aus identischen Rohlingen Filterlagen 2 mit unterschiedlichen Durchmessern an ihren jeweiligen axialen Endbereichen geformt werden.

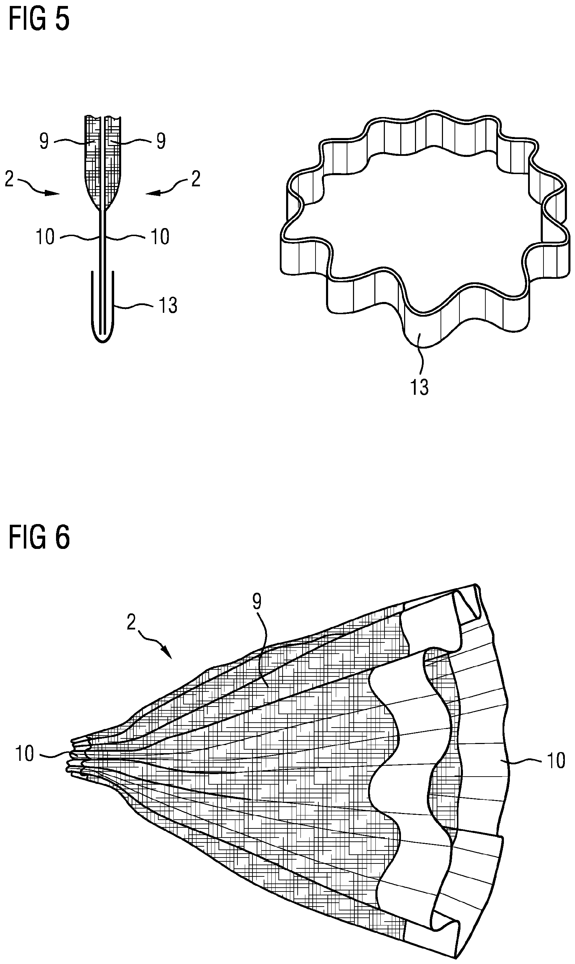

Die Figur 5 zeigt im linken Teil zwei Filterlagen 2, die wieder aus einem Metallvlies 9 und einem Metallstreifen 10 gebildet sind, die in einen rinnenartigen Ring 13 eingesteckt sind. Insbesondere die Metallstreifen 10 sind in den rinnenartigen Ring 13 eingesteckt. Zur Erreichung einer fluiddichten Verbindung zwischen den Filterlagen 2 können die Filterlagen 2 beispielsweise mit dem rinnenartigen Ring verlötet oder verschweißt werden.
Im rechten Teil der Figur 5 ist eine perspektivische Ansicht eines rinnenartigen Rings gezeigt, der der Formgebung der gewellten Filterlagen 2 aus den Figuren 3 und 4 angepasst ist.

Die Figur 6 zeigt eine zu einem tütenförmigen Gebilde verformte gewellte Filterlage 2. Dabei ist insbesondere der eine axiale Endbereich der betroffenen Filterlage 2 derart aufeinander gefaltet, dass der Metallstreifen 10 mehrfach aufeinander liegt. Die Filterlage 2 kann durch das Verlöten der Kontaktstellen zwischen den einzelnen Bereichen des Metallstreifens 10 fluiddicht verschlossen werden.

Diese sogenannte Filtertüte bildet speziell die in radialer Richtung des Filterkörpers betrachtet im Zentrum liegende Filterlage aus.

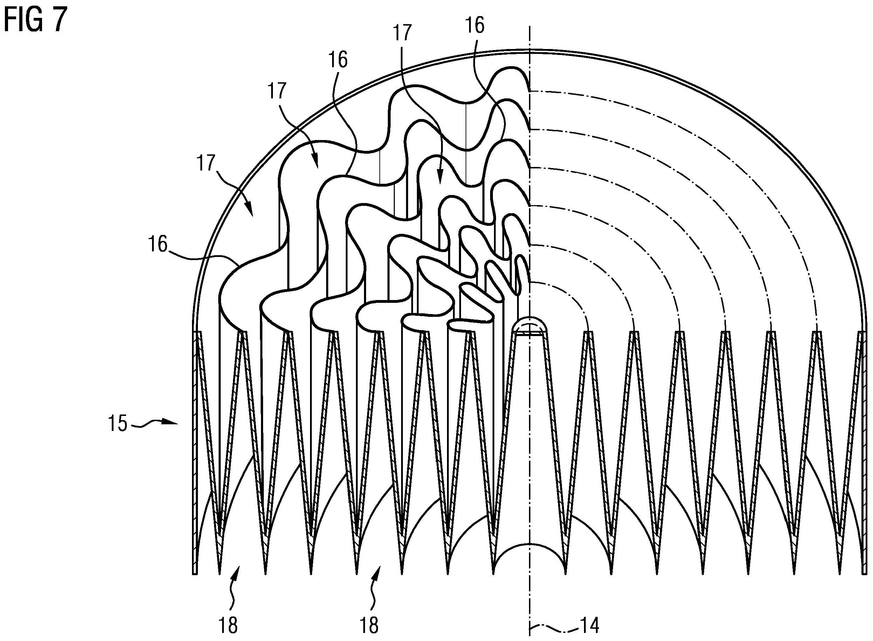

Die Figur 7 zeigt einen Schnitt entlang der Mittelachse 14 durch das Gehäuse 15 des Filters. Im Gehäuse 15 sind mehrere konzentrisch zueinander angeordnete als gewellte, ringförmige Elemente ausgebildete Filterlagen 16 dargestellt.

Das Gehäuse 15 ist durch einen Ring gebildet, der den Filterkörper in radialer Richtung begrenzt. Die in radialer Richtung äußerste Filterlage 16 ist am oberen Endbereich des Gehäuses 15 mit diesem fluiddicht verbunden, so dass kein Abgas an dieser Filterlage vorbei ungefiltert durch den Filter strömen kann.

Die Filterlagen 16 weisen alle eine in Umfangsrichtung umlaufende Wellung auf, wobei alle Filterlagen 16 bis auf die in radialer Richtung innerste Lage die gleiche Anzahl an Wellentälern und Wellenbergen aufweist. Die Amplitude der einzelnen Wellen nimmt in radialer Richtung von außen nach innen zu. Dies wird dadurch erreicht, dass vorzugsweise alle ringförmigen Filterlagen 16 aus dem gleichen Rohling produziert werden. Durch das Aufweiten der ringförmigen Rohlinge über einem konischen Formelement, erhalten die Filterlagen 16 einerseits ihre konische Form und andererseits erhalten sie ihren finalen Durchmesser. Je stärker die Filterlagen 16 dabei aufgeweitet werden, umso stärker werden die Wellungen abgeflacht.

Die in radialer Richtung äußerste Filterlage 16 hat zumindest an der Stoßstelle mit dem Gehäuse 15 praktisch gar keine Wellung mehr und kann somit besonders gut fluiddicht mit dem Gehäuse verbunden werden.

Im Schnitt der Figur 7 ist gut zu erkennen, dass sich die Strömungskanäle 17 an der Einströmseite, welche in Figur 7 beispielsweise oben ist, mit zunehmender Einströmtiefe verjüngen. Das Abgas kann praktisch entlang der gesamten Filterlagen 16 in die zur jeweiligen Filterlage 16 benachbarten Strömungskanäle 18 überströmen. Die Strömungskanäle 18 nehmen von der Einströmseite hin zur unten liegenden Ausströmseite zu.

Der Schnitt durch den Filter zeigt den grundsätzlich zieharmonikaartigen Aufbau des Filterkörpers in dem Gehäuse 15. Die in radialer Richtung innerste Filterlage ist zu einem tütenförmigen Element umgeformt und einseitig fluiddicht verschlossen, so dass dieser Endbereich nicht durchströmt werden kann.

Die unterschiedlichen Merkmale der einzelnen Ausführungsbeispiele können auch untereinander kombiniert werden. Die Ausführungsbeispiele der Figuren 1 bis 6 weisen insbesondere keinen beschränkenden Charakter auf und dienen der Verdeutlichung des Erfindungsgedankens.

## Patentansprüche

1. Filter zur Reinigung von Abgasen eines mit einem Ottokraftstoff betriebenen Verbrennungsmotors mit einem von Abgas in axialer Richtung durchströmbarem Gehäuse mit einer Einströmseite und mit einer Ausströmseite, wobei in dem Gehäuse aus einer Mehrzahl von Filterlagen ein Filterkörper gebildet ist, der von dem durch das Gehäuse strömbarem Abgas durchströmbar ist, wobei die Filterlagen (2, 16) ringförmig ausgebildet sind und konzentrisch zueinander angeordnet sind, wobei alternierend zwei in radialer Richtung zueinander benachbarte Filterlagen (2, 16) an der Einströmseite miteinander fluiddicht verbunden sind und zwei in radialer Richtung zueinander benachbarte Filterlagen (2, 16) an der Ausströmseite miteinander verbunden sind, **dadurch gekennzeichnet, dass** die ringförmigen Filterlagen (2, 16) eine in Umfangsrichtung des Filterkörpers (1) verlaufende Wellung aufweisen.

2. Filter nach Anspruch 1, **dadurch gekennzeichnet, dass** der Filterkörper (1) in radialer Richtung abwechselnd sich von der Einströmseite hin zur Ausströmseite verjüngende Strömungskanäle (7, 17) und sich von der Ausströmseite hin zur Einströmseite verjüngende Strömungskanäle (8, 18) aufweist.

3. Filter nach einem der vorhergehenden Ansprüche, **dadurch gekennzeichnet, dass** der Filterkörper (1) in einem Schnitt entlang der Mittelachse (14) des Gehäuses (3, 15) eine wellenförmige Form aufweist, wobei die Wellung zwischen der Einströmseite und der Ausströmseite verläuft.

4. Filter nach einem der vorhergehenden Ansprüche, **dadurch gekennzeichnet, dass** die Filterlagen (2, 16) durch ein Metallvlies (9) gebildet sind.

5. Filter nach einem der vorhergehenden Ansprüche, **dadurch gekennzeichnet, dass** die Filterlagen (2, 16) an den der Einströmseite zugewandten und/oder an den der Ausströmseite zugewandten Endbereichen einen fluidundurchlässigen in Umfangsrichtung verlaufenden Metallstreifen (10) aufweisen.

6. Filter nach einem der vorhergehenden Ansprüche, **dadurch gekennzeichnet, dass** die einzelnen Filterlagen (2, 16) durch ringförmig aufgerollte Metallfolien gebildet sind, wobei sich der Querschnitt der jeweiligen Filterlagen (2, 16) von der Einströmseite hin zur Ausströmseite konisch verjüngt oder konisch erweitert.

7. Filter nach einem der vorhergehenden Ansprüche, **dadurch gekennzeichnet, dass** jeweils zwei in radialer Richtung direkt zueinander benachbarte Filterlagen (2, 16) an der Einströmseite oder der Ausströmseite miteinander fluiddicht verbunden sind.

8. Filter nach Anspruch 7, **dadurch gekennzeichnet, dass** die jeweils fluiddicht miteinander verbundenen Filterlagen (2, 16) endseitig in rinnenartige Ringe (13) eingesetzt sind und die jeweiligen Endbereiche der Filterlagen (2, 16) von den rinnenartigen Ringen (13) umfasst sind.

9. Filter nach einem der vorhergehenden Ansprüche, **dadurch gekennzeichnet, dass** zwischen zwei miteinander fluiddicht verbundenen Filterlagen (2, 16) ein in Umfangsrichtung verlaufendes Dichtungselement (5) angeordnet ist.

10. Filter nach einem der vorhergehenden Ansprüche, **dadurch gekennzeichnet, dass** die in radialer Richtung äußerste erste Filterlage (2, 16) an der Einströmseite mit dem Gehäuse (3, 15) fluiddicht in Umfangsrichtung verbunden ist und diese erste Filterlage (2, 16) an der Ausströmseite mit der in radialer Richtung hin zum Zentrum direkt benachbarten zweiten Filterlage (2, 16) in Umfangsrichtung fluiddicht verbunden ist, und die zweite Filterlage (2, 16) an der Einströmseite mit der in radialer Richtung dritten Filterlage (2, 16) in Umfangsrichtung fluiddicht verbunden ist, wobei sich dieses Verbindungsprinzip bis zur in radialer Richtung betrachtet innersten Filterlage (2, 16) fortsetzt, die endseitig an der Einströmseite oder der Ausströmseite fluiddicht mit sich selbst verschlossen ist.

11. Filter nach einem der vorhergehenden Ansprüche, **dadurch gekennzeichnet, dass** zwischen zwei zueinander in radialer Richtung direkt benachbarten Filterlagen (2, 16) ein wellenförmiges in Umfangsrichtung verlaufendes Abstandselement (6) angeordnet ist.

12. Filter nach einem der vorhergehenden Ansprüche, **dadurch gekennzeichnet, dass** die in radialer Richtung innerste Filterlage (2, 16) hin zur Einströmseite oder hin zur Ausströmseite endseitig fluiddicht verschlossen ist, wodurch diese Filterlage eine kegelförmige Grundform aufweist.

13. Filter nach Anspruch 1, **dadurch gekennzeichnet, dass** die in radialer Richtung zueinander benachbarten Filterlagen (2, 16) mit Ausnahme der in radialer Richtung äußersten Filterlage (2, 16) und der innersten Filterlage die gleiche Anzahl an Wellenbergen und Wellentälern in Umfangsrichtung aufweisen.

14. Filter nach Anspruch 1, **dadurch gekennzeichnet, dass** die Amplitude der Wellenberge und der Wellentäler an den Filterlagen (2, 16) in radialer Richtung des Filterkörpers (1) von außen nach innen zunimmt.

15. Verfahren zur Herstellung eines Filters nach einem der vorhergehenden Ansprüche, wobei der Filterkörper (1) aus einer Mehrzahl von Filterlagen (2, 16) gebildet ist, die konzentrisch zueinander angeordnet sind und in ein Gehäuse (3, 15) eingesetzt sind, wobei die einzelnen Filterlagen (2, 16) durch das ringförmige Aufwickeln einer Metallfolie ausgebildet werden und die ringförmigen Metallfolien anschließend über ein sich konisch erweiterndes Formelement (12) gezogen werden, wobei die den Filterkörper (1) bildenden Filterlagen (2, 16) von innen nach außen jeweils um eine definierte Strecke weiter über das sich konisch erweiternde Formelement (12) gezogen werden, um konische Filterlagen (2, 16) mit größer werdendem Durchmesser zu erhalten, **dadurch gekennzeichnet, dass** die ringförmigen Filterlagen (2, 16) eine in Umfangsrichtung gewellte Form aufweisen, wobei sich durch das Aufweiten der ringförmigen Filterlagen (2, 16) an dem Formelement (12) die Amplitude der Wellung umso stärker verringert, je weiter die Filterlage (2, 16) über das Formelement (12) gezogen wird.

16. Verfahren nach Anspruch 15, **dadurch gekennzeichnet, dass** die konisch zulaufenden Filterlagen (2, 16) derart ineinander gesetzt werden, dass die zueinander in radialer Richtung direkt benachbarten Filterlagen (2, 16) abwechselnd mit der kleinere Querschnittsfläche zur Einströmseite und zur Ausströmseite angeordnet sind, so dass sich ein ziehharmonikaartiger Aufbau des Filterkörpers (1) ergibt, wobei der mittlere Querschnitt der Filterlagen (2, 16) in radialer Richtung von außen nach innen abnimmt.

## Claims

1. Filter for the purification of exhaust gases of an internal combustion engine which is operated with gasoline, having a housing which can be flowed through by exhaust gas in an axial direction and which has an inflow side and an outflow side, wherein a filter body is formed in the housing from a multiplicity of filter layers, which filter body can be flowed through by the exhaust gas that can be caused to flow through the housing, wherein the filter layers (2, 16) are of annular form and are arranged concentrically with respect to one another, wherein, in alternating fashion, two filter layers (2, 16) which are adjacent to one another in a radial direction are connected to one another in fluid-tight fashion at the inflow side, and two filter layers (2, 16) which are adjacent to one another in a radial direction are connected to one another at the outflow side, **characterized in that** the annular filter layers (2, 16) have an undulation running in a circumferential direction of the filter body (1).

2. Filter according to Claim 1, **characterized in that** the filter body (1) has, in alternating fashion in a radial direction, flow channels (7, 17) which narrow from the inflow side towards the outflow side and flow channels (8, 18) which narrow from the outflow side towards the inflow side.

3. Filter according to either of the preceding claims, **characterized in that** the filter body (1) has an undulating form in a section along the central axis (14) of the housing (3, 15), wherein the undulation runs between the inflow side and the outflow side.

4. Filter according to any of the preceding claims, **characterized in that** the filter layers (2, 16) are formed by a metal nonwoven (9).

5. Filter according to any of the preceding claims, **characterized in that** the filter layers (2, 16) have, at the end regions facing towards the inflow side and/or at the end regions facing towards the outflow side, a fluid-impermeable metal strip (10) which runs in a circumferential direction.

6. Filter according to any of the preceding claims, **characterized in that** the individual filter layers (2, 16) are formed by metal foils which are rolled up in annular fashion, wherein the cross section of the respective filter layers (2, 16) conically narrows or conically widens from the inflow side in the direction of the outflow side.

7. Filter according to any of the preceding claims, **characterized in that** in each case two filter layers (2, 16) which are directly adjacent to one another in a radial direction are connected to one another in fluid-tight fashion at the inflow side or the outflow side.

8. Filter according to Claim 7, **characterized in that** the filter layers (2, 16) which are in each case connected to one another in fluid-tight fashion are inserted at an end side into groove-like rings (13), and the respective end regions of the filter layers (2, 16) are encompassed by the groove-like rings (13).

9. Filter according to any of the preceding claims, **characterized in that**, between two filter layers (2, 16) which are connected to one another in fluid-tight fashion, there is arranged a seal element (5) which runs in a circumferential direction.

10. Filter according to any of the preceding claims, **characterized in that** that first filter layer (2, 16) which is outermost in a radial direction is connected at the inflow side in fluid-tight fashion in a circumferential direction to the housing (3, 15), and said first filter layer (2, 16) is connected at the outflow side in fluid-tight fashion in a circumferential direction to that second filter layer (2, 16) which is directly adjacent in a radial direction towards the centre, and the second filter layer (2, 16) is connected at the inflow side in fluid-tight fashion in a circumferential direction to that filter layer (2, 16) which is third in the radial direction, wherein this connection principle continues as far as the innermost filter layer (2, 16) as viewed in a radial direction, which innermost filter layer is closed off with itself in fluid-tight fashion at the end side at the inflow side or the outflow side.

11. Filter according to any of the preceding claims, **characterized in that**, between two filter layers (2, 16) which are directly adjacent to one another in a radial direction, there is arranged an undulating spacer element (6) which runs in a circumferential direction.

12. Filter according to any of the preceding claims, **characterized in that** that filter layer (2, 16) which is innermost in a radial direction is closed off in fluid-tight fashion at the end side towards the inflow side or towards the outflow side, whereby said filter layer has a conical basic form.

13. Filter according to Claim 1, **characterized in that** those filter layers (2, 16) which are adjacent to one another in a radial direction, with the exception of that filter layer (2, 16) which is outermost in a radial direction and the innermost filter layer, have the same number of undulation peaks and undulation troughs in a circumferential direction.

14. Filter according to Claim 1, **characterized in that** the amplitude of the undulation peaks and of the undulation troughs on the filter layers (2, 16) increases from the outside inwards in a radial direction of the filter body (1) .

15. Method for producing a filter according to any of the preceding claims, wherein the filter body (1) is formed from a multiplicity of filter layers (2, 16) which are arranged concentrically with respect to one another and which are inserted into a housing (3, 15), wherein the individual filter layers (2, 16) are formed by virtue of a metal foil being wound in annular fashion, and the annular metal foils are subsequently pulled over a conically widening moulding element (12), wherein the filter layers (2, 16) which form the filter body (1) are, from the inside outwards, pulled in each case a defined distance further over the conically widening moulding element (12) in order to realize conical filter layers (2, 16) with an increasing diameter, **characterized in that** the annular filter layers (2, 16) have an undulating form in a circumferential direction, wherein, as a result of the expansion of the annular filter layers (2, 16) on the moulding element (12), the amplitude of the undulation decreases to an ever greater extent the further the filter layer (2, 16) is pulled over the moulding element (12).

16. Method according to Claim 15, **characterized in that** the conically tapering filter layers (2, 16) are inserted one inside the other such that those filter layers (2, 16) which are directly adjacent to one another in a radial direction are arranged alternately with the relatively small cross-sectional area towards the inflow side and towards the outflow side, giving rise to an accordion-like construction of the filter body (1), wherein the average cross section of the filter layers (2, 16) decreases in a radial direction from the outside inward.

## Revendications

1. Filtre pour la purification des gaz d'échappement d'un moteur à combustion interne qui fonctionne avec un carburant pour moteur à allumage par étincelle, comprenant un boîtier qui peut être traversé dans la direction axiale par un flux de gaz d'échappement et qui est pourvu d'un côté d'afflux et d'un côté d'éjection, un corps de filtre étant formé dans le boîtier à partir d'une pluralité de couches de filtre, lequel peut être traversé par le flux de gaz d'échappement pouvant s'écouler à travers le boîtier, les couches de filtre (2, 16) étant réalisées en forme de bague et étant disposées de manière concentrique les unes par rapport aux autres, deux couches de filtre (2, 16) voisines l'une de l'autre dans la direction radiale étant reliées entre elles du côté de l'afflux de manière étanche aux fluides et, en alternance, deux couches de filtre (2, 16) voisines l'une de l'autre dans la direction radiale étant reliées entre elles du côté de l'éjection, **caractérisé en ce que** les couches de filtre (2, 16) en forme de bague possèdent une ondulation qui suit un tracé dans la direction périphérique du corps de filtre (1).

2. Filtre selon la revendication 1, **caractérisé en ce que** le corps de filtre (1) possède, dans la direction radiale, des canaux d'écoulement (7, 17) qui se rétrécissent du côté de l'afflux vers le côté de l'éjection et, en alternance, des canaux d'écoulement (8, 18) qui se rétrécissent du côté de l'éjection vers le côté de l'afflux.

3. Filtre selon l'une des revendications précédentes, **caractérisé en ce que** le corps de filtre (1), dans une coupe le long de l'axe central (14) du boîtier (3, 15), présente une forme ondulée, l'ondulation suivant un tracé entre le côté de l'afflux et le côté de l'éjection.

4. Filtre selon l'une des revendications précédentes, **caractérisé en ce que** les couches de filtre (2, 16) sont formées par un feutre métallique (9).

5. Filtre selon l'une des revendications précédentes, **caractérisé en ce que** les couches de filtre (2, 16) possèdent, au niveau des zones d'extrémité qui font face au côté de l'afflux et/ou qui font face au côté de l'éjection, une bande métallique (10) qui suit un tracé dans la direction périphérique.

6. Filtre selon l'une des revendications précédentes, **caractérisé en ce que** les couches de filtre (2, 16) individuelles sont formées par des films métalliques enroulés en forme de bague, la section transversale des couches de filtre (2, 16) respectives se rétrécissant de manière conique ou s'élargissant de manière conique du côté de l'afflux vers le côté de l'éjection.

7. Filtre selon l'une des revendications précédentes, **caractérisé en ce que** deux couches de filtre (2, 16) directement voisines l'une de l'autre dans la direction radiale sont respectivement reliées entre elles de manière étanche aux fluides au niveau du côté de l'afflux ou du côté de l'éjection.

8. Filtre selon la revendication 7, **caractérisé en ce que** les couches de filtre (2, 16) respectivement reliées entre elles de manière étanche aux fluides sont insérées du côté de l'extrémité dans des bagues (13) en forme de goulotte et les zones d'extrémité respectives des couches de filtre (2, 16) sont enserrées par les bagues (13) en forme de goulotte.

9. Filtre selon l'une des revendications précédentes, **caractérisé en ce qu'**un élément d'étanchéité (5) qui suit un tracé dans la direction périphérique est disposé entre deux couches de filtre (2, 16) reliées entre elles de manière étanche aux fluides.

10. Filtre selon l'une des revendications précédentes, **caractérisé en ce que** la première couche de filtre (2, 16), la plus à l'extérieur dans la direction radiale, est reliée au boîtier (3, 15) de manière étanche aux fluides dans la direction périphérique au niveau du côté de l'afflux et cette première couche de filtre (2, 16), au niveau du côté de l'éjection, est reliée de manière étanche aux fluides dans la direction périphérique à la deuxième couche de filtre (2, 16) directement voisine dans la direction radiale vers le centre, et la deuxième couche de filtre (2, 16) est reliée de manière étanche aux fluides dans la direction périphérique à la troisième couche de filtre (2, 16) au niveau du côté de l'afflux, ce principe de liaison se poursuivant jusqu'à la couche de filtre (2, 16) la plus à l'intérieur, vue dans la direction radiale, laquelle est fermée à l'extrémité sur elle-même de manière étanche aux fluides du côté de l'afflux ou du côté de l'éjection.

11. Filtre selon l'une des revendications précédentes, **caractérisé en ce qu'**un élément d'espacement (6) ondulé qui suit un tracé dans la direction périphérique est disposé entre deux couches de filtre (2, 16) directement voisines dans la direction radiale.

12. Filtre selon l'une des revendications précédentes, **caractérisé en ce que** la première couche de filtre (2, 16), la plus à l'intérieur dans la direction radiale, est fermée de manière étanche aux fluides vers le côté de l'afflux ou vers le côté de l'éjection, moyennant quoi cette couche de filtre présente une forme de base conique.

13. Filtre selon la revendication 1, **caractérisé en ce que** les couches de filtre (2, 16) voisines les unes des autres dans la direction radiale, à l'exception de la couche de filtre (2, 16) la plus à l'extérieur dans la direction radiale et de la couche de filtre la plus à l'intérieur, possèdent le même nombre de crêtes d'ondulation et de creux d'ondulation dans la direction périphérique.

14. Filtre selon la revendication 1, **caractérisé en ce que** l'amplitude des crêtes d'ondulation et des creux d'ondulation au niveau des couches de filtre (2, 16) augmente de l'extérieur vers l'intérieur dans la direction radiale du corps de filtre (1) .

15. Procédé de fabrication d'un filtre selon l'une des revendications précédentes, le corps de filtre (1) étant formé d'une pluralité de couches de filtre (2, 16) qui sont disposées de manière concentrique les unes par rapport aux autres et sont insérées dans un boîtier (3, 15), les couches de filtre (2, 16) individuelles étant formées par l'enroulement en forme de bague d'un film métallique et les films métalliques en forme de bague étant ensuite tirés sur un élément de façonnage (12) qui s'élargit en forme de cône, les couches de filtre (2, 16) qui forment le corps de filtre (1) étant en plus tirées de l'intérieur vers l'extérieur respectivement sur un segment défini sur l'élément de façonnage (12) qui s'élargit en forme de cône afin d'obtenir des couches de filtre (2, 16) dont le diamètre augmente,
**caractérisé en ce que**
les couches de filtre (2, 16) en forme de bague présentent une forme ondulée dans la direction périphérique, l'élargissement des couches de filtre (2, 16) en forme de bague au niveau de l'élément de façonnage (12) entraînant une diminution de l'amplitude de l'ondulation d'autant plus importante que le tirage de la couche de filtre (2, 16) sur l'élément de façonnage (12) se poursuit.

16. Procédé selon la revendication 15, **caractérisé en ce que** les couches de filtre (2, 16) qui s'approchent de manière conique sont posées l'une dans l'autre de telle sorte que les couches de filtre (2, 16) directement voisines les unes des autres dans la direction radiale sont disposées en alternance avec la surface de section transversale la plus petite vers le côté d'afflux et vers le côté d'éjection, de manière à obtenir une structure de type en accordéon du corps de filtre (1), la section transversale centrale des couches de filtre (2, 16) diminuant de l'extérieur vers l'intérieur dans la direction radiale.
